# EUROPEAN PATENT APPLICATION

(11) **EP 0 849 503 A1**
(43) Date of publication of application: **24.06.1998**
(21) Application number: 97203695.8
(22) Date of filing: 26.11.1997
(51) Int. Cl.: F16H 61/00, F16H 61/12, B60K 41/22

(54) **Method for controlling a transmission unit for motor vehicles and transmission unit applying such a method**

(30) Priority: 17.12.1996 BE 9601051
(71) Applicant: VCST, naamloze vennootschap, 3800 Sint-Truiden (BE)
(72) Inventor: Reniers, Dirk Louis, 3600 Genk (BE); Vogelaar, Gerrit-Jan, 3512 Hasselt (BE); Helsen, Stijn Marie Alfred, 3150 Haacht (BE)
(74) Representative: Donné, Eddy

(57) **Abstract**

Method for regulating a transmission unit for motor vehicles, in particular a transmission unit (1) which makes use of a belt variator (2), a reversing unit (20) and hydraulically controlled drive-off coupling means, whereby these drive-off coupling means consist of a forward coupling (18) and a reverse coupling (19) which can be excited via pressure regulating means with an adjustable clutch pressure, characterized in that the clutch pressure is hydraulically regulated, both as a function of a Pitot pressure which is representative for the engine speed, namely the engine Pitot pressure, and as a function of a regulated pressure which is set by means of an electronically controlled valve (48).

## Description

The present invention concerns a method for regulating a transmission unit for motor vehicles, as well as a transmission unit applying such a method.

In particular, it concerns a method for regulating the clutch pressure of the drive-off coupling in transmission units which are provided with a belt variator.

As is known, such a belt variator consists of a primary pulley placed on an ingoing shaft, a secondary pulley placed on a driven shaft and an endless transmission element provided between both pulleys. Each pulley is hereby formed of two conical pulley halves which can be moved in relation to one another, such that the transmission ratio can be altered by pulling the pulley halves more or less apart. The mutual position of the pulley halves is set as a function of various data by means of hydraulic pressure cylinders which are controlled by means of regulating means.

The belt variator is coupled to the motor of the motor vehicle via a reversing unit and a drive-off coupling, and it is connected to the wheels by means of the driven shaft, such that, by means of the drive-off coupling, which consists of a forward coupling and a reverse coupling, either the connection between the motor and the belt variator can be broken, a connection can be made in the forward driving direction, or a connection can be made in the reverse driving direction.

The forward coupling and the reverse coupling consist of flexible disc couplings which are excited in a hydraulic manner. The control can hereby be carried out according to known embodiments in a hydraulic or electronic manner.

With the known hydraulically controlled transmission units, the drive-off coupling is controlled by a clutch pressure which is mainly determined by the engine speed, such via an engine Pitot pressure which, as is known, depends quadratically on the engine speed.

With the known entirely electronically controlled transmission units, the clutch pressure is set as a function of various parameters which are processed in an electronic manner. To this end, rather expensive electronic hardware is required, and moreover a hydraulic backup system has to be provided for which assumes a minimal number of functions in case the electronics fail, so that the hydraulic control unit is still very complex, although the control is carried out electronically.

Also, the present invention aims a method and transmission unit whereby the two above-mentioned systems are combined such that, with a relatively simple hydraulic control unit and relatively simple electronic hardware, the clutch pressure can be set as a function of a large number of parameters, among others the engine speed, the clutch slip, the throttle position, the speed of the vehicle, etc.

To this aim, the invention provides a method for regulating a transmission unit for motor vehicles, in particular a transmission unit which makes use of a belt variator, a reversing unit and hydraulically controlled drive-off coupling means, whereby these drive-off coupling means consist of a forward coupling and a reverse coupling which are excited via pressure regulating means with an adjustable clutch pressure, characterized in that the clutch pressure is both regulated as a function of a Pitot pressure which is representative for the engine speed, namely the engine Pitot pressure, and as a function of a regulated pressure which is set by means of an electronically controlled valve.

Preferably, the clutch pressure is controlled such as a function of the engine Pitot pressure, that an increase of the engine Pitot pressure and of the pressure supplied by the electronically controlled valve results in an increase of the clutch pressure.

According to a special characteristic of the invention, the regulation by means of the electronically controlled valve is preferably maintained until the belt variator is geared up into a predetermined transmission ratio, and after this transmission ratio has been reached, the above-mentioned regulated pressure is replaced by a constant pressure which is sufficiently high to obtain that the coupling in question is closed. Thus is obtained that slip on the clutch concerned is excluded as soon as a certain transmission ratio is reached, without any electronics being required to this end.

According to a variant, the clutch pressure is also regulated as a function of a Pitot pressure which is representative for the primary rotational speed, in other words the rotational speed on the ingoing shaft of the belt variator. This clutch pressure is hereby regulated such as a function of said Pitot pressure, called the primary Pitot pressure, that an increase of the primary Pitot pressure results in the lowering of the clutch pressure. Consequently, in the hydraulic way, the clutch pressure will depend on the primary rotational speed and thus on the clutch slip, so that the electronic regulation can be made simpler.

According to a preferred embodiment, the pressure which is supplied by the above-mentioned electronically controlled valve is hydraulically adjusted as a function of at least one Pitot pressure, either a Pitot pressure which is representative for the engine speed, namely the engine Pitot pressure, or a Pitot pressure which is representative for the rotational speed at the ingoing shaft of the belt variator, namely the primary Pitot pressure.

According to the most preferred embodiment, this adjustment is carried out by adjusting the supply pressure of the electronically controlled valve as a function of one or both of the above-mentioned Pitot pressures, whereby for one and the same control of the electronically controlled valve, the supply pressure is made to rise when the engine Pitot pressure rises and/or is made to lower when the primary Pitot pressure increases.

According to the most preferred embodiment, the adjustment is carried out both as a function of the engine Pitot pressure and as a function of the primary Pitot pressure.

In order to better explain the characteristics of the invention, the following preferred embodiment of a transmission unit applying the method according to the invention is described as an example only without being limitative in any way, with reference to the sole accompanying drawing.

As is represented in this figure, the invention concerns a transmission unit 1 which makes use of a belt variator 2.

As is known, the belt variator 2 consists of a primary pulley 4 placed on an ingoing shaft 3 with at least one pulley half 5 which can be axially moved; a secondary pulley 7 placed on a driven shaft 6 with at least one pulley half 8 which can be axially moved; and an endless transmission element 9 provided between the pulleys 4 and 7, such as a belt, such that the transmission ratio between the shafts 3 and 6 can be altered by axially moving the pulley halves 5 and 8.

The pulley halves 5 and 8 are moved by means of hydraulic pressure cylinders working in conjunction therewith, a primary pressure cylinder 10 and a secondary pressure cylinder 11 respectively, whose pressures are regulated by means of a primary regulating valve 12 and a secondary regulating valve 13 which are part of a hydraulic control unit 14 which is fed in the known manner with a hydraulic medium under pressure which is pumped up from a reservoir 16 by means of a pump 15.

The ingoing shaft 3 is usually driven by the motor 21 of the motor vehicle concerned via drive-off coupling means 17 which consist as such of a forward coupling 18 and a reverse coupling 19 and via a reversing unit 20. The reversing unit 20 usually consists of a planetary transition of which certain parts can be alternately locked by means of the forward coupling 18 and the reverse coupling 19, such that the driven shaft 6 can be driven, depending on the coupling 18 or 19 being activated, in the same sense of rotation or the opposite sense of rotation of the shaft of the motor 21.

The forward coupling 18 and the reverse coupling 19 consist of hydraulically enforced multi-plate clutches which can be closed via pressure cylinders working in conjunction therewith.

The coupling 18 or 19 is closed by supplying medium under pressure to it via a pipe 22 and a switch valve 24 which can be operated by means of the gear lever 23 of the motor vehicle, such that, by switching this switch valve 24, either the pressure from the pipe 22 will be supplied to the forward coupling 18 via a pipe 25, or this pressure will be supplied to the reverse coupling 19 via a pipe 26, or both couplings 18-19 will be maintained pressureless.

To this aim, the switch valve 24 is provided with a valve disc 27 with a chamber 28 which, following the movement of the valve disc 27 either makes no connection at all between the pipes 22-25-26, makes a connection between the pipes 22-25 or makes a connection between the pipes 22-26.

As of the pipe 25 can be provided a branch 29 which, by means of a cooler device 30, cools the forward coupling 18 when it is activated.

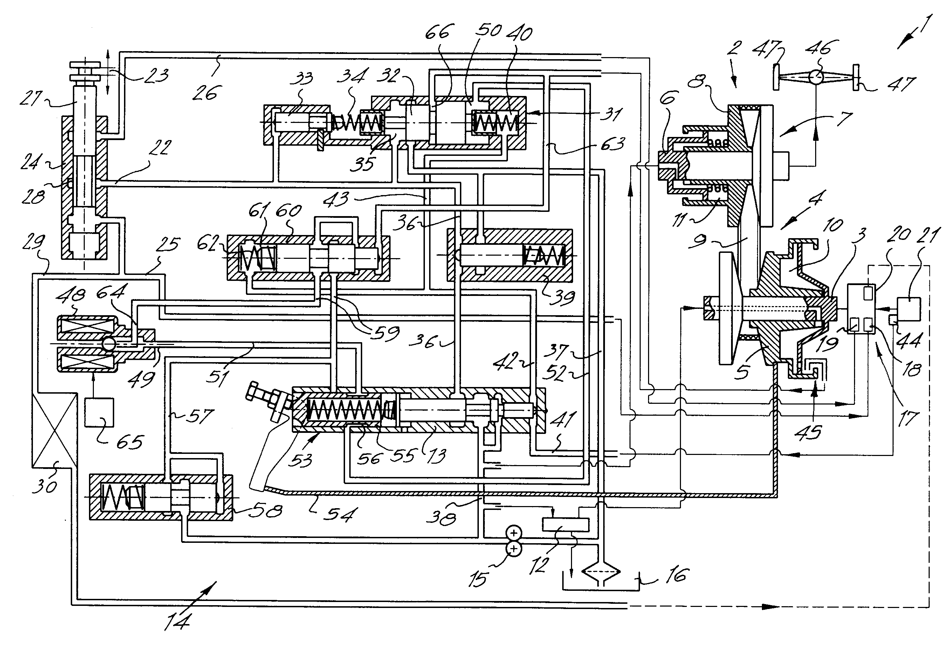

The pressure in the pipe 22 and in the activated coupling 18 or 19 is regulated by means of pressure regulating means, including a pressure regulating valve 31. As is represented in the example of the accompanying figure, said pressure regulating valve 31 usually has two valve discs 32-33 which are set in relation to one another by means of a spring 34. In order to regulate the pressure in the pipe 22, the latter is connected to a chamber 35 in the valve disc 32. This chamber 35 is fed with medium under pressure via a pipe 36. When the valve disc 32 moves, fluid can be blown off from the chamber 35, via the pipe 37, so that the pressure in the chamber 35 can be set and consequently also the pressure in the pipe 22.

As is represented in the figure, the pipe 36 can be fed with the medium which is blown off at the secondary regulating valve 13. The secondary regulating valve 13 is fed in turn via the pipe 38.

In the pipe 36 is preferably provided an underpressure valve 39, as is represented.

The valve disc 32 is loaded by the engine Pitot pressure via a chamber 40, in this case via pipes 41-42-43. To this end, the whole is provided with an engine Pitot unit 44 with which the engine Pitot pressure is determined which, as is known, is a pressure that is representative for the rotational speed at the shaft of the motor 21.

Further, the whole is provided with a primary Pitot unit 45 with which the primary Pitot pressure is determined, i.e. a pressure which is representative for the rotational speed of the ingoing shaft 3.

Both Pitot pressures form control pressures which, as will be described hereafter, are used for the control.

It is clear that the movement of the driven shaft 6 is transferred to a number of wheels 47 of the motor vehicle via a differential 46 or such.

The invention is special in that the pressure regulating means, in particular the above-mentioned pressure regulating valve 31, are connected to the above-mentioned engine Pitot unit 44 as well as to an electronically controlled valve 48, and in that the pressure regulating valve 31 is controlled as a function of both the engine Pitot pressure and a pressure which is set by means of the electronically controlled valve 48.

The connection to the engine Pitot unit 44 consists of the pipe 41-42-43 which leads into the chamber 40, so that a pressure opposite to the above-mentioned spring 34 is exerted. The outlet 49 of the electronically controlled valve 48 is also connected to a chamber 50 provided on said valve disc 32, so that also a pressure opposite to the spring 34 is exerted on the valve disc 32. This connection is formed by the pipes 51-52.

As is represented in the figure, a valve 53 is preferably provided in said connection, which makes sure that the regulation by means of the electronically controlled valve 48 is maintained until the belt variator 2 is geared up into a predetermined transmission ratio, and that, after this transmission ratio has been reached, the above-mentioned regulated pressure is replaced by a constant pressure which makes sure that the coupling 18-19 concerned is at all times closed. This valve 53 preferably works in conjunction with the primary pulley 4 of the belt variator 2 by means of for example a feeler unit which is schematically represented in the accompanying drawing by means of a mechanical link 54 between the moveable pulley half 5 and the valve disc 55 of the above-mentioned valve 53.

As is represented, the valve 53 may be part of the secondary regulating valve 13 which, as is known, is usually already equipped with a feeler unit which has the same function, so that no separate feeler unit, nor a separate valve disc has to be provided.

In order to realize the above-mentioned change-over between a regulated and a constant pressure, the valve disc 55 is equipped with a gate 56 which, in the position as represented in the figure, makes a connection between the pipes 51 and 52, but which, as a result of the movement of the valve disc 55 to the left interrupts the connection between the pipes 51 and 52 as of a certain position, and which connects the pipe 52 to a pipe 57 in which a constant pressure prevails, regulated by the constant pressure valve 58.

This constant pressure valve 58 also feeds the valve 48 via the pipes 57-59.

As is represented, a feed valve 60 is preferably but not necessarily provided in the pipe 59 with a valve disc 61 which is loaded in one direction by a spring 62 and a pressure supplied by the engine Pitot unit 44, and which is loaded in the other direction by the pressure supplied by the valve and the primary Pitot pressure supplied via a pipe 63. As a result, the pressure on the inlet 64 of the electronically controlled valve 48 and consequently also on the outlet 49 thereof, depending on both the primary Pitot pressure and the engine Pitot pressure, is controlled, so that a hydraulic adjustment is obtained as mentioned above.

The electronically controlled valve 48 preferably consists of a pulse-modulated passage valve which is controlled by means of a control unit 65.

As is represented in the accompanying drawing, the clutch pressure is preferably also regulated as a function of the primary Pitot pressure, in a hydraulic manner. To this end, the pressure regulating valve 31 is provided with a chamber 66 which is connected to the primary Pitot unit 45, whereby the pressure exerted in this chamber 66 delivers a force opposite to the force exerted on the valve disc 32 by the engine Pitot pressure.

It is clear that various variants are possible and that the connection of the primary Pitot pressure to the pressure regulating valve 31, as well as the insertion of the feed valve 60 in the feeder of the electronically controlled valve 48 are optional.

The present invention is by no means restricted to the embodiments described by way of example and represented in the accompanying drawings; on the contrary, such a method for regulating a transmission unit, as well as such a transmission unit applying this method, can be made according to several variants while still remaining within the scope of the invention.

## Claims

1. Method for regulating a transmission unit for motor vehicles, in particular a transmission unit (1) which makes use of a belt variator (2), a reversing unit (20) and hydraulically controlled drive-off coupling means, whereby these drive-off coupling means consist of a forward coupling (18) and a reverse coupling (19) which can be excited via pressure regulating means with an adjustable clutch pressure, characterized in that the clutch pressure is hydraulically regulated, both as a function of a Pitot pressure which is representative for the engine speed, namely the engine Pitot pressure, and as a function of a regulated pressure which is set by means of an electronically controlled valve (48).

2. Method according to claim 1, characterized in that the clutch pressure is controlled such as a function of the engine Pitot pressure that an increase of the engine Pitot pressure results in an increase of the clutch pressure.

3. Method according to claim 1 or 2, characterized in that the regulation by means of the electronically controlled valve is maintained until the belt variator (2) is geared up into a predetermined transmission ratio, and in that after this transmission ratio has been reached, the above-mentioned regulated pressure is replaced by a constant pressure which makes sure that the coupling (18-19) concerned is closed.

4. Method according to claim 1, 2 or 3, characterized in that the clutch pressure is also regulated as a function of a Pitot pressure which is representative for the primary rotational speed, in other words the rotational speed at the ingoing shaft (3) of the belt variator (2).

5. Method according to claim 4, characterized in that the clutch pressure is regulated such as a function of the primary Pitot pressure that an increase of the primary Pitot pressure results in a lowering of the clutch pressure.

6. Method according to any of the preceding claims, characterized in that the pressure supplied by the above-mentioned electronically controlled valve (48) is hydraulically adjusted as a function of at least one Pitot pressure, either a Pitot pressure which is representative for the engine speed, namely the engine Pitot pressure, or a Pitot pressure which is representative for the rotational speed at the ingoing shaft (3) of the belt variator, namely the primary Pitot pressure.

7. Method according to claim 6, characterized in that the supply pressure of the electronically controlled valve (48) is adjusted as a function of one or several of the above-mentioned Pitot pressures, whereby for one and the same control of the electronically controlled valve (48), the supply pressure on this valve (48) is made to rise when the engine Pitot pressure rises and/or is made to lower when the primary Pitot pressure increases.

8. Method according to claim 6 or 7, characterized in that the adjustment is carried out both as a function of the engine Pitot pressure and of the primary Pitot pressure.

9. Transmission unit applying the method of claim 1, in particular a transmission unit which makes use of a belt variator (2), a reversing unit (20) and hydraulically controlled drive-off coupling means, whereby these drive-off coupling means consist of a forward coupling (18) and a reverse coupling (19) which can be excited with an adjustable clutch pressure via pressure regulating means, characterized in that the pressure regulating means are connected to a Pitot unit which supplies a Pitot pressure which is representative for the engine speed of the motor vehicle, namely an engine Pitot unit (44), whereby this connection makes sure that a decrease of the engine Pitot pressure results in a decrease of the clutch pressure, as well as to an electronically controlled valve (48).

10. Transmission unit according to claim 9, characterized in that pressure regulating means consist of a pressure regulating valve (31) which is connected to the above-mentioned couplings (18-19) via a switch valve (24) or such, whereby this pressure regulating valve (31) has a spring-loaded valve disc (32) with a spring (34) loading the valve disc in the same direction as the clutch pressure; that the above-mentioned connection with the engine Pitot unit (44) consists of a pipe (41-42-43) which opens into a chamber (40) in said valve disc (32), so that a pressure opposite to the above-mentioned spring (34) is exerted; and in that the outlet (49) of the electronically controlled valve (48) is connected to a chamber (50) provided on said valve disc (32), so that also a pressure opposite to the spring (34) is exerted on the valve disc (32).

11. Transmission unit according to claim 9 or 10, characterized in that it is provided with a valve (53) which makes sure that the regulation by means of the electronically controlled valve (48) is maintained until the belt variator (2) is geared up into a predetermined transmission ratio, and in that, after this transmission ratio has been reached, the above-mentioned regulated pressure is replaced by a constant pressure which makes sure that the coupling (18-19) concerned is closed.

12. Transmission unit according to claim 11, characterized in that the belt variator (2) consists of a primary and a secondary pulley (4-7) having each at least one pulley half (5-8) which can be axially moved, in between which is provided an endless transmission element (9), and in that the above-mentioned valve (53) works in conjunction with the primary pulley (4) of the belt variator (2) by means of a feeler unit.

13. Transmission unit according to claim 12, characterized in that the movement of the pulley halves is controlled by means of a primary and a secondary regulating valve (12-13) and in that the above-mentioned valve (53) is part of the secondary regulating valve (13).

14. Transmission unit according to any of claims 9 to 13, characterized in that the pressure regulating means consist of a pressure regulating valve (31) and in that the valve disc (32) of this pressure regulating valve (31) is provided with a chamber (66) which is connected to a Pitot unit (45) which supplies a pressure as a function of the rotational speed of the ingoing shaft (3) of the belt variator (2), namely a primary Pitot unit (45), whereby the pressure exerted in this chamber (66) delivers a force working opposite to the force exerted on the valve disc (32) by the engine Pitot pressure.

15. Transmission unit according to any of claims 9 to 14, characterized in that the above-mentioned electronically controlled valve (48) is fed hydraulically by means of a feed valve (60), with a valve disc (61) which is loaded by a spring (62) and a pressure supplied by the engine Pitot unit (44) in one direction, and which is loaded in the other direction by the pressure supplied by the valve (60) and the primary Pitot pressure.

16. Transmission unit according to any of claims 9 to 14, characterized in that the electronically controlled valve (48) consists of a pulse-modulated passage valve.
